# EUROPÄISCHE PATENTSCHRIFT

(11) **EP 1 870 309 B1**
(45) Veröffentlichungstag und Bekanntmachung des Hinweises auf die Patenterteilung: **11.11.2009**
(21) Anmeldenummer: 07011034.1
(22) Anmeldetag: 05.06.2007
(51) Int. Cl.: B62D 1/185, B62D 1/184, F16F 7/08

(54) **Vorrichtung zur Führung eines Körpers und Lenksäule für ein Kraftfahrzeug**
Device for guiding the body and steering column for a motor vehicle
Dispositif de guidage d'un corps et colonne de direction pour un véhicule automobile

(30) Priorität: 21.06.2006 DE 102006028832
(43) Veröffentlichungstag der Anmeldung: 26.12.2007
(73) Patentinhaber: ThyssenKrupp Presta AG, 9492 Eschen (LI)
(72) Erfinder: Galehr, Robert, 9493 Mauren (LI); Ambagtsheer, Willem, 9104 Waldstatt (CH); Domig, Markus, 6832 Rötis (AT)
(74) Vertreter: LENZING GERBER

(56) Entgegenhaltungen:
- DE-U1-202004 001 793
- GB-A- 2 295 219

## Beschreibung

Die vorliegende Erfindung betrifft eine Vorrichtung zur Führung eines Körpers nach dem Oberbegriff des Anspruchs 1 und eine Lenksäule für ein Kraftfahrzeug nach dem Oberbegriff des Anspruchs 6.

Insbesondere aus dem Bereich verstellbarer Lenksäulen von Kraftfahrzeugen ist es bekannt, Gleitführungen aus Kunststoff mit einem die Führung quer durchgreifenden Bolzen vorzusehen, wobei ein jeweils endseitig des Verstellwegs an der Führung vorgesehener Anschlag mit einem Dämpfungsmittel versehen ist. Die Dämpfung im Endbereich des Verstellwegs verbessert den Komfort bei der Verstellung der Lenksäule durch den Fahrer und verhindert ein hartes Anschlagen von Bauteilen, was über die Lebensdauer zu einer Abnutzung der Teile führen kann. Die bekannten Versionen von Dämpfungsmitteln für solche Führungen umfassen elastische Mittel, die im Wesentlichen in Richtung der Bewegung des geführten Lagerbolzens einwirken. Bei solchen Dämpfern kann es sich um einen eingesetzten weicheren Kunststoff handeln. Eine solche Lenksäule ist aus der GB 2 295 219 A bekannt. Bei dieser bekannten Version ist die Herstellung aufwendig und kostenintensiv, da unterschiedliche Materialien an dem Bauteil zum Einsatz kommen. Bei einer anderen bekannten Version einer solchen Führung ist das Dämpfungsmittel als materialeinheitliche Bügelfeder an der Führung ausgebildet. Diese Lösung ist zwar relativ kostengünstig herstellbar, bietet jedoch einen recht harten und ungedämpft rückfedernden Anschlag.

Weiter ist aus dem deutschen Gebrauchsmuster DE 20 2004 001 793 U1 eine Vorrichtung zur Dämpfung der Schließbewegung beispielsweise einer Möbelschublade bekannt. Hier wird die Schließbewegung mittels einer an der Schublade befestigten Zunge gebremst, die in eine Führung eintaucht und dort durch seitlich anliegende federnde Elemente unter Reibungswirkung gebremst wird. Die Vorrichtung bremst die Bewegung in einem Endabschnitt, stellt jedoch keinen gedämpften Anschlag dar. Außerdem ist die Bauweise entweder der Zunge oder der Führung mehrteilig.

Es ist die Aufgabe der Erfindung, eine Vorrichtung zur Führung eines Körpers anzugeben, bei der eine zuverlässige endseitige Anschlagsdämpfung des geführten Körpers mit einfachen Mitteln und kostengünstig herstellbar ist.

Diese Aufgabe wird für eine eingangs genannte Vorrichtung erfindungsgemäß mit den kennzeichnenden Merkmalen des Anspruchs 1 gelöst. Weil der Vorsprung einstückig mit der Führungswand ausgebildet ist, wobei die Auslenkung des Vorsprungs mit einer elastischen Verformung der Führungswand einhergeht, wird durch die doppelte Funktion der Führungswand als Führung und zur Ausübung einer federelastischen Kraft zur Dämpfung des geführten Körpers Bauraum und benötigte Materialmenge optimiert.

In vorteilhafter Ausgestaltung sind die beiden Führungswände jeweils endseitig über Kopfstücke miteinander verbunden, wobei zwischen den Führungswänden eine längliche Führungsöffnung ausgebildet ist. Hierdurch ist die erfindungsgemäße Vorrichtung als einheitliches Bauteil vormontierbar oder auch einstückig herstellbar. Durch die Kopfstücke kann zugleich auf einfache Weise ein jeweils endseitiger Anschlag ausgebildet werden. In bevorzugter Weiterbildung weist die Vorrichtung ein Rastmittel zur Festlegung der Vorrichtung an einem Tragteil auf, wobei das Rastmittel insbesondere bevorzugt an zumindest einem der Kopfstücke vorgesehen ist. Dies ermöglicht eine kompakte Bauweise in Verbindung mit einer einfachen Montage.

In allgemein vorteilhafter Ausgestaltung weist das Dämpfungsmittel sowohl an der einen Führungswand als auch auf gleicher Höhe an der anderen Führungswand einen Vorsprung auf, wobei die Vorsprünge durch den geführten Körper eine gleichzeitige elastische Auslenkung erfahren. Durch die im wesentlichen symmetrische Anordnung ist eine Optimierung der Dämpfungskraft bei geringem Bauraum gegeben. Zudem wird ein asymmetrischer Verschleiß des Materials der Vorrichtung vermieden und die Lebensdauer erhöht.

In einer besonders kostengünstigen und zweckmäßigen Ausführung sind die Führungswände, der Anschlag und das Dämpfungsmittel insgesamt als einstückiges Kunststoff-Formteil ausgebildet. Im Interesse einer kostengünstigen Massenfertigung ist das Kunststoff-Formteil dabei als Spritzgussteil ausgebildet. Ein besonders geeignetes Kunststoffmaterial ist Polyoxymethylen (POM). Dieser Kunststoff weist eine gute Härte und Federelastizität auf, so dass er insbesondere zur Führung eines Metallteils und zur Ausübung ausreichender Dämpfungskräfte im Sinne der Erfindung geeignet ist. Der Kunststoff kann auf bekannte Weise Zuschlagstoffe wie etwa verstärkende Glasfasern zur Optimierung seiner Eigenschaften enthalten.

Weiterhin bevorzugt ist das Kunststoff-Formteil in eine Öffnung eines Tragteils einsetzbar, wobei die Führungswände einen Überstand bezüglich einer Wandstärke des Tragteils aufweisen, so dass die Auslenkung des Vorsprungs in dem Bereich des Überstands erfolgt. Hierdurch kann die Öffnung des Tragteils einfach geformt sein, ohne dass besondere Ausnehmungen zur Berücksichtigung der Auslenkung der Vorsprünge notwendig sind.

Allgemein bevorzugt umfasst der Vorsprung eine gegenüber der Führungsrichtung geneigte Rampe. Dies ermöglicht einen definierten Anstieg der der Bewegung des geführten Körpers entgegengesetzten Kraft über einen ausreichend langen Weg, so dass die Dämpfung des geführten Körpers als besonders komfortabel empfunden wird. Insbesondere bevorzugt schließt dabei die Rampe zu der Führungsrichtung einen Winkel zwischen etwa 5 Grad und etwa 12 Grad, insbesondere bevorzugt von etwa 8 Grad, ein. Dieser Winkelbereich hat in Versuchen eine besonders gute Dämpfungscharakteristik gezeigt.

Weiterhin vorteilhaft weist der Vorsprung eine größte Auslenkung im Zustand der Anlage des geführten Körpers an dem Anschlag auf. Hierdurch ist ein Einrasten des geführten Körpers im angeschlagenen Zustand vermieden, was etwa dann der Fall sein kann, wenn der Vorsprung im Zustand des Anschlags seine maximale Auslenkung bereits überschritten hätte und somit den geführten Körper gegen den Anschlag hält.

Allgemein vorteilhaft ist der geführte Körper von im wesentlichen kreisförmigem Querschnitt. Die runden Wände des geführten Körpers gleiten hierbei vorteilhaft auf den Vorsprüngen, so dass eine wohldosierte Brems- und Dämpfungskraft bei Auslenkung der Vorsprünge auftritt. In einer alternativen Ausführung kann der geführte Körper auch einen parallel zu einer der Führungswände geraden Wandabschnitt aufweisen, so dass ein Verdrehen des Körpers zwischen den Führungswänden verhindert ist. Ein solcher Körper kann zum Beispiel einen im wesentlichen rechteckigen Querschnitt aufweisen, wobei ein mit dem Vorsprung zusammenwirkender Teil des Körpers zweckmäßig verrundet oder angefast ist.

In einer bevorzugten Ausführungsform ist der geführte Körper als eine sich senkrecht zu der Führungsrichtung erstreckende Spannachse ausgebildet, wobei die Spannachse über Festlegemittel in einer wählbaren Position entlang der Führungsrichtung lösbar festlegbar ist.

Die Bestimmung des kleinsten Abstandes der Vorsprünge erfolgt aufgrund dem Elastizitätsmodul des verwendeten Kunststoffes, sowie der Wandstärke der Führungswände und dem Überstand der Führungswände bzw. der Größe des Flächenabschnitts der Führungswände, der durch die Auslenkung der Vorsprünge nach außen auslenkbar ist.

Die erfindungsgemäße Vorrichtung zur Führung eines Körpers ist zudem besonders als Führungsmittel für eine Lenksäule für ein Kraftfahrzeug nach dem Oberbegriff des Anspruchs 16 geeignet. Bevorzugt erfolgt die Verstellbewegung dabei im Wesentlichen in Richtung einer Lenkwelle, wobei die Führungswände im Wesentlichen parallel zu der Lenkwelle ausgerichtet sind. Gerade bei der Längsverstellung einer Lenksäule eines Kraftfahrzeugs durch den Fahrer ist ein weicher Anschlag in den Endpositionen gewünscht, um dem Fahrer über die haptische Rückmeldung eine robuste Mechanik zu signalisieren. Gleichzeitig ist bei derartigen Großserienbauteilen für Kraftfahrzeuge auf eine einfache Montage und kostengünstige Herstellung der Bauteile zu achten, so dass die erfindungsgemäße Vorrichtung in Verbindung mit der Verstellung einer Lenksäule für ein Kraftfahrzeug besonders geeignet ist.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel einer Lenksäule mit einer daran vorgesehenen erfindungsgemäßen Vorrichtung beschrieben und anhand der anliegenden Zeichnungen näher erläutert.
- Fig. 1: zeigt eine räumliche Ansicht einer erfindungsgemäßen Vorrichtung.
- Fig. 2: zeigt eine Draufsicht auf die Vorrichtung aus Fig. 1 von oben.
- Fig. 3: zeigt eine Schnittansicht der Vorrichtung aus Fig. 2 entlang der Linie A-A.
- Fig. 4: zeigt eine Schnittansicht der Vorrichtung aus Fig. 2 entlang der Linie B-B.
- Fig. 5: zeigt die Ansicht aus Fig. 4 mit einem im endseitigen Anschlag befindlichen geführten Körper.
- Fig. 6: zeigt einen Detailausschnitt einer Draufsicht auf die Vorrichtung aus Fig. 1 von oben.
- Fig. 7: zeigt die Vorrichtung aus Fig. 6 mit einem im endseitigen Anschlag befindlichen geführten Körper.
- Fig. 8: zeigt eine räumliche Ansicht einer verstellbaren Lenksäule mit der Vorrichtung aus Fig. 1.
- Fig. 9: zeigt eine Ausschnittsvergrößerung des Bereichs C aus Fig. 8.

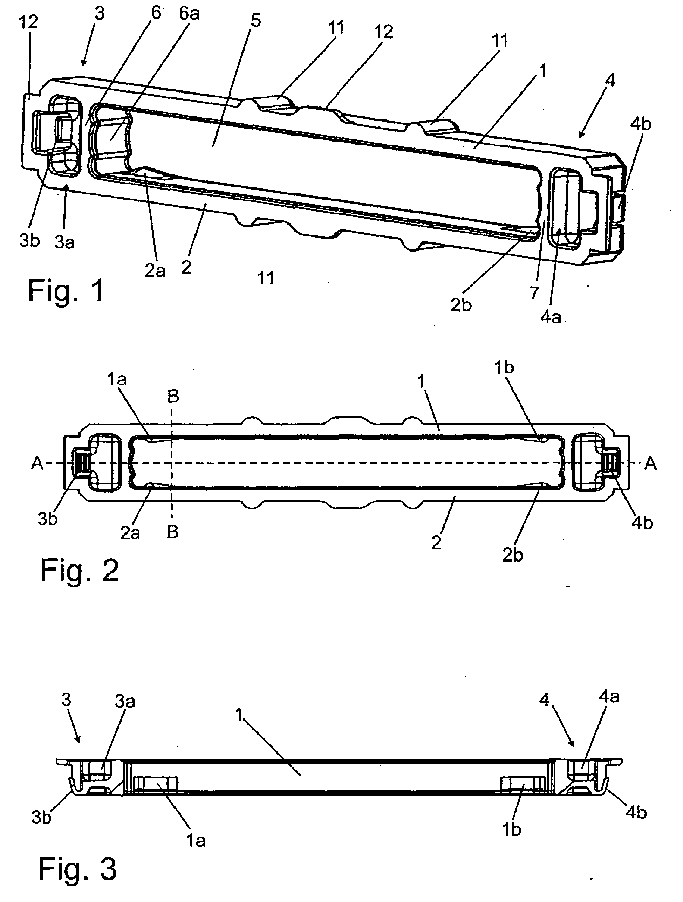

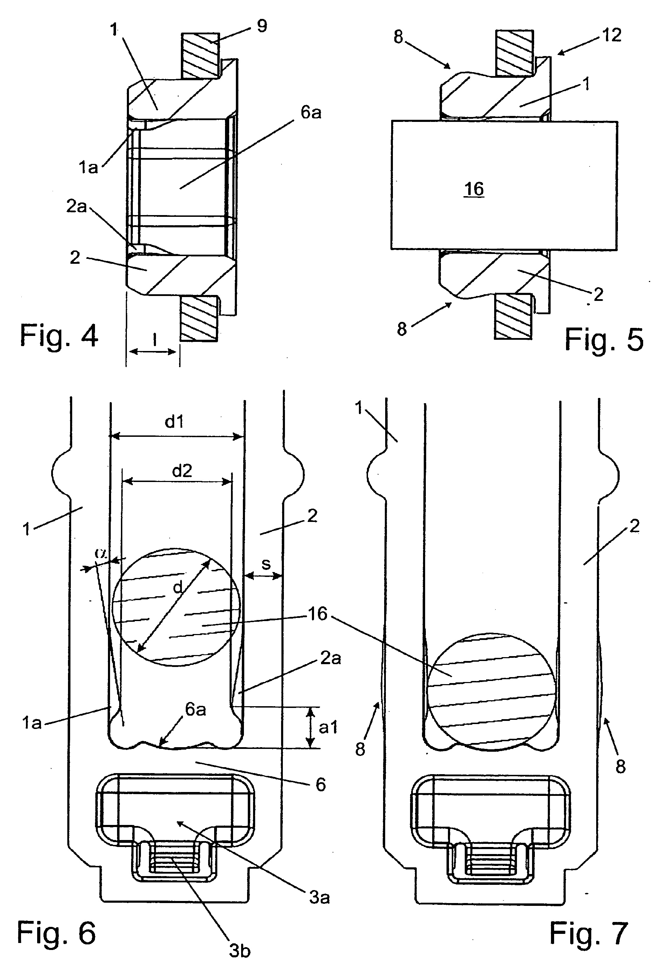

Die Vorrichtung zur Führung eines Körpers ist als einstückiges Kunststoff-Spritzgussteil aus Polyoxymethylen (POM) ausgebildet. Sie hat eine erste Führungswand 1 und eine zweite, parallel dazu angeordnete Führungswand 2, wobei die Führungswände 1, 2 endseitig jeweils über ein erstes Kopfstück 3 und ein zweites Kopfstück 4 miteinander verbunden sind. Die Führungswände 1, 2 haben einen im Wesentlichen rechteckigen Querschnitt (siehe zum Beispiel Fig. 4), wobei das Verhältnis von Breite s zur Tiefe wie etwa 1:2,6 verhält. Sämtliche der Zeichnungen sind maßgerecht, so dass sich insbesondere den ebenen Ansichten Fig. 2 bis Fig. 7 Maßverhältnisse der bevorzugten Ausführung entnehmen lassen.

Zwischen den Führungswänden 1, 2 und den Kopfstücken 3, 4 ist eine längliche Führungsöffnung 5 ausgebildet, die von einem zwischen den Führungswänden 1, 2 geführten Körper vollständig durchgriffen wird. Der geführte Körper ist vorliegend eine zylindrische Spannachse 16. Die Spannachse 16 erstreckt sich senkrecht zu der durch die Führungswände 1,2 begrenzten Führungsöffnung 5.

In den Kopfstücken 3, 4 sind jeweils Aussparungen 3a, 4a vorgesehen, wobei zwischen den Aussparungen 3a, 4a und der Führungsöffnung 5 jeweils stegartige Anschläge 6, 7 ausgeformt sind. Anschlagsflächen 6a, 7a der Anschläge 6, 7 sind dabei konkav verrundet, so dass ein Teil der vorliegend zylindrischen Wand des geführten Körpers 16 flächig an den konkaven Flächen 6a, 7a anschlägt. Hierdurch wird eine gute Kraftverteilung auf die Stege 6, 7 bei Anschlag des Körpers 16 gewährleistet und eine Beschädigung des Materials vermieden. Weiterhin haben die Stege 6, 7 in Richtung der Aussparungen 3a, 4a eine gewisse Nachgiebigkeit, so dass bereits durch die Ausbildung der Stege 6, 7 eine geringe Dämpfung des Anschlags des geführten Körpers 16 gegeben ist.

Der wesentliche Teil einer Dämpfung des endseitig anschlagenden Körpers 16 erfolgt durch Vorsprünge 1a, 1b, 2a, 2b, die jeweils im Endbereich der Führungswände 1, 2 kurz vor den Anschlagsflächen 6a, 6b positioniert sind und von den Führungswänden 1, 2 nach in die Führungsöffnung 5 hineinragen. Im Bereich der Vorsprünge 1a, 1b, 2a, 2b verlaufen die Führungswände 1, 2 nicht parallel, da die Vorsprünge jeweils nach Art einer Rampe in die Führungsöffnung 5 hinein ansteigen. Die Oberfläche der Vorsprünge bzw. der Rampe ist gemäß Fig. 6 um einen Winkel Alpha von etwa 8° gegenüber der Führungsrichtung bzw. dem Verlauf der parallelen Abschnitte der Führungswände 1, 2 geneigt.

Wenn sich der geführte Körper 16 dem jeweils endseitigen Anschlag 6 oder 7 nähert, so trifft er auf die rampenartigen Vorsprünge 1a, 2a oder 1b, 2b. Der geführte Körper 16 ist vorliegend aus Metall und allgemein aus einem härterem Material als die Führungswände 1, 2. Hierdurch werden die Vorsprünge im wesentlichen senkrecht zu der Führungsrichtung nach Außen ausgelenkt, was mit einer Deformation der Führungswände 1, 2 einhergeht. In Fig. 5 sowie in Fig. 7 sind ballige Ausformungen 8 der Führungswände 1, 2 angedeutet, die ein elastisches Ausweichen des Materials der deformierten Führungswände 1, 2 andeuten. Je nach elastischen Eigenschaften des verwendeten Materials und der Formgebung der Führungswände und der Vorsprünge kann die elastische Deformation auch anders geartet sein und z. B. in einem Verdrehen der Führungswände nach Art eines Drehstabs oder Ähnlichem erfolgen.

Aufgrund des relativ flachen Winkels Alpha von etwa 8° beruht ein erheblicher Teil der dämpfenden, der Bewegung des geführten Körpers 16 entgegenwirkenden Kraft auf Reibung an den Oberflächen der Vorsprünge und nur ein kleinerer Anteil der von den Vorsprüngen 1a-2b auf den Körper 16 ausgeübten Kraft ist eine elastisch rücktreibende Kraft. Wenn der Körper 16 zwischen den Vorsprüngen zum Stillstand kommt, sei es im angeschlagenen oder noch nicht angeschlagenen Zustand, so kompensiert die Haftreibung der Vorsprünge die elastisch rücktreibende Kraft, so dass der geführte Körper 16 jede Position zwischen den Anschlägen ohne Einwirkung äußerer Haltekräfte statisch annehmen kann.

Der Abstand a1 in der Führungsrichtung zwischen dem höchsten Punkt der Vorsprünge 1a-2b und der Anschlagsfläche 6a ist kleiner oder gleich dem halben Durchmesser d des geführten Körpers 16 (siehe Fig. 6). Hierdurch ist in der angeschlagenen Position des Körpers 16 (siehe Fig. 7) sichergestellt, dass die Vorsprünge 1a, 2a den Körper 16 nicht gegen den Anschlag 6a drücken. Durch die vorliegenden Maßverhältnisse wird eine Übertotpunktlage des Körpers 16 im angeschlagenen Zustand verhindert. Vorliegend beträgt der Durchmesser d des geführten Körpers 8 mm und der Abstand al beträgt etwa 3,5 mm, also etwa 10% weniger als d/2.

Es ist natürlich auch denkbar und möglich, ein Einrasten des geführten Körpers in der Endlage vorzusehen. Hierzu würde der Abstand al entsprechend größer ausgelegt werden. Im Beispiel würde er d/2 zuzüglich 10% betragen. Eine derartige Ausführung ist aber im Falle der Anwendung bei Lenksäulen für Kraftfahrzeuge nicht gewünscht.

In Fig. 6 sind einige weitere Maße der erfindungsgemäßen Vorrichtung dargestellt. Die Führungswände 1, 2 haben in ihrem parallelen Bereich einen konstanten Abstand d1 von etwa 8,1 mm. Der geführte zylindrische Körper 16 mit seinem Durchmesser d von 8,0 mm ist somit mit geringem Spiel und daher bis auf den Bereich der Vorsprünge im Wesentlichen ohne Reibung innerhalb der Führungsöffnung 5 entlang der Führungsrichtung zwangsgeführt.

Der kleinste Abstand d2 der Führungswände 1, 2 im Bereich der größten Erhebung der Vorsprünge 1a-2b beträgt etwa 7 mm, so dass jeder der Vorsprünge 1a-2b im nicht ausgelenkten Zustand um ca. 0,5 mm von der Führungswand 1, 2 in die Führungsöffnung 5 hineinragt. Die Breite s jeder der Führungswände 1, 2 beträgt etwa 2,43 mm.

Bei einer durch Versuche optimierten Vorrichtung hat sich eine besondere geeignete Dämpfungscharakteristik ergeben, wenn die Differenz aus dem Durchmesser (d) des geführten Körpers und dem kleinsten Abstand (d2) der Vorsprünge der Führungswände aus dem Produkt aus dem Faktor etwa 0,55mm bis etwa 0,6mm, bevorzugt etwa 0,57mm, mal dem Quotienten aus der dritten Potenz des Überstandes (1) geteilt durch die dritte Potenz der Wandstärke (s) der Führungswand bestimmt ist.

Die Vorrichtung ist bezüglich der Schnittebene A-A gemäß Fig. 2 im wesentlichen symmetrisch ausgebildet. An jedem der Kopfstücke 3, 4 ist ein federnder Haken 3b, 4b als Rastmittel ausgeformt, mittels dessen die Vorrichtung in einer Öffnung eines Tragteils 9 eingerastet und festgelegt werden kann. Fig. 4 und Fig. 5 zeigen die Vorrichtung in einem in das Tragteil 9 eingesetzten Zustand. Eine Wandstärke des Tragteils 9 ist dabei nur knapp halb so groß wie die Tiefe der Führungswände 1, 2. Die Führungswände 1, 2 haben somit einen Überstand über die Wand des Tragteils 9, wobei die Vorsprünge 1a-2b sich nur im Bereich dieses Überstands über die Tiefe der Führungswände 1, 2 erstrecken (siehe Fig. 4). Hierdurch können die Führungswände 1, 2 bei Auslenkung der Vorsprünge 1a-2b federelastisch ausweichen, ohne dass zu große Gegenkräfte durch Verpressung mit dem Tragteil 9 auftreten. Bei alternativen Ausführungen, bei denen kein Überstand über ein Tragteil 9 vorgesehen werden kann, kann die Öffnung des Tragteils 9 auch mit entsprechenden Ausnehmungen zum Ausweichen des Materials der Führungswände 1, 2 im Bereich der Vorsprünge versehen sein. Falls auch dies nicht möglich ist, so kann durch geeignete Materialwahl und Dimensionierung der Führungswände, gegebenenfalls auch durch Ausnehmungen im Material der Führungswände, ein geeignetes federelastisches Auslenken der Vorsprünge erreicht werden.

Die Vorrichtung umfasst zudem Ausbuchtungen 11 der Führungswände 1, 2 und Abkragungen 12, wodurch die Vorrichtung im Zuge des Einsetzens in die Öffnung des Tragteils 9 auf einfache Weise und in richtiger Orientierung positioniert wird.

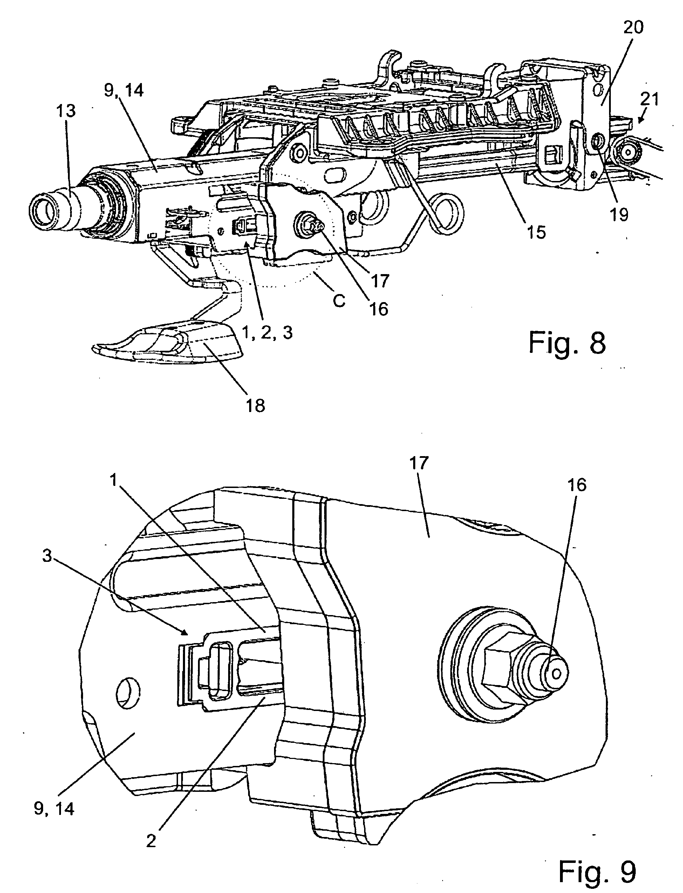

Fig. 8 zeigt eine räumliche Ansicht einer Lenksäule eines Kraftfahrzeugs, bei der die Vorrichtung aus Fig. 1 bis Fig. 7 enthalten ist. Eine oberer Teil einer Lenkwelle 13 ist an einem Gehäuse 14 drehbar gelagert. Über einen teleskopischen Eingriff kann der obere Teil der Lenkwelle 13 in Richtung der Lenkwelle gegenüber einem unterem Teil 15 der Lenkwelle bewegt werden, so dass die Lenksäule insgesamt in ihrer Länge verstellbar ist.

Hierzu weist das Gehäuse 14 eine Öffnung zur Aufnahme der zuvor beschriebenen Vorrichtung zur Führung eines Körpers auf. Das Gehäuse 14 entspricht daher dem Tragteil 9 der Fig. 4 und Fig. 5. Die Führungsöffnung 5 der Vorrichtung und das Gehäuse 14 werden von einer Spannachse 16 durchgriffen, die an einer Trägerplatte 17 gelagert ist. Die Spannachse 16 entspricht dem zuvor beschriebenen geführten Körper 16.

Die Spannachse 16 ist über einen Feststellhebel 18 in ihrer axialen Richtung spannbar, wodurch sie über ein Verspannen der Trägerplatte 17 gegen das Gehäuse 14 und/oder die Vorrichtung in ihrer wählbaren Position innerhalb der Führungsöffnung 5 fixierbar ist. Hierdurch wird zugleich die eingestellte Länge der Lenksäule fixiert. In der gelösten Stellung des Hebels 18 kann die Lenkwelle 13 mit dem Gehäuse 14 gegenüber der bezüglich der Karosserie feststehenden Spannachse 16 verschoben werden, wobei die endseitigen Anschläge der Verschiebebewegung auf die zuvor beschriebene Weise gedämpft werden. Es versteht sich, dass in alternativer oder ergänzender Ausführung auch die Führungseinrichtung bzw. Vorrichtung zur Führung eines Körpers an einem fahrzeugfesten Halteteil integriert sein kann, an dem das verstellbare Lenksäulenteil lösbar festlegbar ist.

Es versteht sich, dass die Vorrichtung alternativ oder ergänzend bei einer Höhenverstellung der Lenksäule vorgesehen sein kann. Die in Fig. 8 gezeigte Lenksäule weist eine solche Höhenverstellung, die genauer eine Verstellung eines Neigungswinkels ist, wozu die Lenkwelle über ein Drehgelenk 19 mit einem Träger 20 verbunden ist und zudem ein kardanisches Gelenk 21 aufweist. Insbesondere bei einer solchen Höhen- oder Neigungsverstellung der Lenksäule können die Führungswände 1, 2 auch einen gekrümmten Verlauf aufweisen, so dass der Körper 16 zum Beispiel auf dem Ausschnitt einer Kreisbahn geführt ist.

Insgesamt können an einer Lenksäule auch mehrere der Vorrichtungen bzw. Führungsmittel für insbesondere mehrere Verstellrichtungen vorgesehen sein.

## Patentansprüche

1. Vorrichtung zur Führung eines Körpers, umfassend
eine erste Führungswand (1) und eine zweite, zu der ersten Führungswand im wesentlichen parallele Führungswand (2),
wobei ein geführter Körper (16) durch die beiden Führungswände (1, 2) in zumindest einer Führungsrichtung führbar ist,
wobei eine Bewegung des geführten Körpers (16) in der Führungsrichtung durch einen Anschlag (6, 7) begrenzt ist, und
ein Dämpfungsmittel (1a, 1b, 2a, 2b), wobei durch das Dämpfungsmittel (1a, 1b, 2a, 2b) eine der Bewegung des geführten Körpers (16) entgegengesetzte Kraft auf den Körper (16) ausübbar ist,
wobei
das Dämpfungsmittel (1a, 1b, 2a, 2b) einen an zumindest einer der Führungswände (1, 2) angeordneten Vorsprung (1a, 1b, 2a, 2b) umfasst, wobei der Vorsprung (1a, 1b, 2a, 2b) durch den geführten Körper (16) in einer zu der Führungsrichtung im wesentlichen senkrechten Richtung federelastisch auslenkbar ist,
**dadurch gekennzeichnet, dass** der Vorsprung (1a, 1b, 2a, 2b) einstückig mit der Führungswand (1, 2) ausgebildet ist, wobei die Auslenkung des Vorsprungs (1a, 1b, 2a, 2b) mit einer elastischen Verformung der Führungswand (1, 2) einhergeht.

2. Vorrichtung nach Anspruch 1, **dadurch gekennzeichnet, dass** die beiden Führungswände (1, 2) jeweils endseitig über Kopfstücke (3, 4) miteinander verbunden sind, wobei zwischen den Führungswänden (1, 2) eine längliche Führungsöffnung (5) ausgebildet ist.

3. Vorrichtung nach Anspruch 2, **dadurch gekennzeichnet, dass** die Vorrichtung ein Rastmittel (3b, 4b) zur Festlegung der Vorrichtung an einem Tragteil (9, 14) aufweist, wobei das Rastmittel (3b, 4b) insbesondere an zumindest einem der Kopfstücke (3, 4) angeordnet ist.

4. Vorrichtung nach einem der vorhergehenden Ansprüche, **dadurch gekennzeichnet, dass** die Führungswände (1, 2), der Anschlag (6, 7) und das Dämpfungsmittel (1a, 1b, 2a, 2b) insgesamt als einstückiges Kunststoff-Formteil ausgebildet sind.

5. Vorrichtung nach Anspruch 4, **dadurch gekennzeichnet, dass** das Kunststoff-Formteil in eine Öffnung eines Tragteils (9, 14) einsetzbar ist, wobei die Führungswände (1, 2) einen Überstand bezüglich einer Wandstärke des Tragteils (9, 14) aufweisen, so dass die Auslenkung des Vorsprungs (1a, 1b, 2a, 2b) in dem Bereich des Überstands erfolgt.

6. Lenksäule für ein Kraftfahrzeug, umfassend
ein in seiner Position in mindestens eine Verstellrichtung verstellbares Lenksäulenteil (13, 14), wobei das Lenksäulenteil (13, 14) im Zuge der Verstellbewegung über ein Führungsmittel entlang zumindest einer der Verstellrichtungen geführt ist,
**dadurch gekennzeichnet,**
**dass** das Führungsmittel eine Vorrichtung nach einem der Ansprüche 1 bis 5 umfasst.

7. Lenksäule nach Anspruch 6, **dadurch gekennzeichnet, dass** der geführte Körper (16) als eine sich senkrecht zu der Führungsrichtung erstreckende Spannachse (16) ausgebildet ist, wobei die Spannachse (16) über Festlegemittel (17, 18) in einer wählbaren Position entlang der Führungsöffnung (5) lösbar festlegbar ist.

8. Lenksäule nach einem der Ansprüche 6 oder 7, **dadurch gekennzeichnet, dass** mindestens ein Führungsmittel in das verstellbare Lenksäulenteil (13, 14) integriert ist.

9. Lenksäule nach einem der Ansprüche 6 bis 8**, dadurch gekennzeichnet, dass** mindestens ein Führungsmittel in ein fahrzeugfestes Halteteil, an der das verstellbare Lenksäulenteil (13, 14) lösbar festlegbar ist, integriert ist.

## Claims

1. Device for guiding a body, comprising
a first guide wall (1) and a second guide wall (2) essentially parallel to the first guide wall,
wherein a guided body (16) can be guided by the two guide walls (1, 2) in at least one guidance direction,
wherein a movement of the guided body (16) in the guidance direction is delimited by a stop (6, 7), and
a damping means (1a, 1b, 2a, 2b), wherein a force opposed to the movement of the guided body (16) can be exerted on the body (16) as a result of the damping means (1a, 1b, 2a, 2b),
wherein
the damping means (1a, 1b, 2a, 2b) comprises a projection (1a, 1b 2a, 2b) arranged on at least one of the guide walls (1, 2), wherein the projection (1a, 1b, 2a, 2b) can be deflected in a spring elastic manner by the guided body (16) in a direction essentially perpendicular to the guidance direction,
**characterised in that** the projection (1a, 1b 2a, 2b) is formed as one piece with the guide wall (1, 2), wherein the deflection of the projection (1a, 1b, 2a, 2b) accompanies an elastic deformation of the guide wall (1, 2).

2. Device according to Claim 1, **characterised in that** the two guide walls (1, 2) are connected to one another, in each case at the end side by means of head pieces (3, 4), wherein a longitudinal guide aperture (5) is formed between the guide walls (1, 2).

3. Device according to Claim 2, **characterised in that** the device has an engagement means (3b, 4b) for securing the device to a carrier part (9, 14), wherein the engagement means (3b, 4b) in particular is located on at least one of the head pieces (3, 4).

4. Device according to one of the preceding claims, **characterised in that** the guide walls (1, 2), the stop (6, 7), and the damping means (1a, 1b 2a, 2b) are formed overall as a single-piece plastic shaped part.

5. Device according to Claim 4, **characterised in that** the plastic shaped part can be inserted into an aperture of a carrier part (9, 14), wherein the guide walls (1, 2) have a protrusion in relation to the wall thickness of the carrier part (9, 14), such that the deflection of the projection (1a, 1b 2a, 2b) takes place in the area of the protrusion.

6. Steering column for a motor vehicle, comprising
a steering column part (13, 14) that can be adjusted in at least one adjustment direction, wherein the steering column part (13, 14) is guided, in the course of the adjustment movement, by a guide means along at least one of the adjustment directions,
**characterised in that**
the guide means comprises a device according to one of Claims 1 to 5.

7. Steering column according to Claim 6, **characterised in that** the guided body (16) is formed as a tension axle (16) extending perpendicular to the guidance direction, wherein the tension axle (16) can be secured in a detachable manner by a securing means (17, 18) in a selectable position along the guide aperture (5).

8. Steering column according to one of Claims 6 or 7, **characterised in that** at least one guide means is integrated into the adjustable steering column part (13, 14).

9. Steering column according to one of Claims 6 to 8, **characterised in that** at least one guide means is integrated into a retaining part secured to the vehicle, to which the adjustable steering column part (13, 14) can be secured in a detachable manner.

## Revendications

1. Dispositif pour le guidage d'un corps, comprenant
une première paroi de guidage (1) et une deuxième paroi de guidage (2) sensiblement parallèle à la première paroi de guidage,
dispositif dans lequel un corps guidé (16) peut être guidé dans au moins une direction de guidage par les deux parois de guidage (1, 2),
dans lequel un mouvement du corps guidé (16) dans le dispositif de guidage est limité par une butée (6, 7), et
comprenant également un moyen d'amortissement (1a, 1b, 2a, 2b), ce moyen d'amortissement (1a, 1b, 2a, 2b) exerçant sur le corps (16) une force opposée au mouvement du corps guidé (16),
et le moyen d'amortissement (1a, 1b, 2a, 2b) englobant une protubérance (1a, 1b, 2a, 2b) qui est agencée sur l'une au moins des parois de guidage (1, 2), la protubérance (1a, 1b, 2a, 2b) pouvant être déviée élastiquement par le corps guidé (16), dans une direction sensiblement perpendiculaire à la direction de guidage,
**caractérisé en ce que** la protubérance (1a, 1b, 2a, 2b) est réalisée d'un seul tenant avec la paroi de guidage (1, 2), la déviation de la protubérance (1a, 1b, 2a, 2b) étant en corrélation avec une déformation élastique de la paroi de guidage (1, 2).

2. Dispositif selon la revendication 1, **caractérisé en ce que** les deux parois de guidage (1, 2) sont reliées mutuellement au niveau de chacune de leurs extrémités, par l'intermédiaire de pièces terminales (3, 4), une ouverture de guidage (5) allongée étant formée entre les parois de guidage (1, 2).

3. Dispositif selon la revendication 2, **caractérisé en ce que** le dispositif présente un moyen d'encliquetage (3b, 4b) pour la fixation du dispositif sur une pièce de support (9, 14), le moyen d'encliquetage (3b, 4b) étant agencé en particulier sur au moins l'une des pièces terminales (3, 4).

4. Dispositif selon l'une des revendications précédentes, **caractérisé en ce que** les parois de guidage (1, 2), la butée (6, 7) et le moyen d'amortissement (1a, 1b, 2a, 2b) sont réalisés globalement sous la forme d'une pièce de moulage d'un seul tenant, en matière plastique.

5. Dispositif selon la revendication 4, **caractérisé en ce que** la pièce de moulage en matière plastique peut être insérée dans une ouverture d'une pièce de support (9, 14), les parois de guidage (1, 2) présentant une partie en saillie par rapport à une épaisseur de paroi de la pièce de support (9, 14), de manière à ce que la déviation de la protubérance (1a, 1b, 2a, 2b) s'effectue dans la zone de la partie en saillie.

6. Colonne de direction pour un véhicule automobile, comprenant
une pièce de colonne de direction (13, 14) pouvant être déplacée ou réglée dans sa position dans au moins une direction de déplacement ou de réglage, la pièce de colonne de direction (13, 14) étant guidée au cours du mouvement de déplacement ou de réglage, par l'intermédiaire d'un moyen de guidage, le long d'au moins l'une des directions de déplacement ou de réglage,
**caractérisée en ce que** le moyen de guidage comprend un dispositif selon l'une des revendications 1 à 5.

7. Colonne de direction selon la revendication 6, **caractérisée en ce que** le corps guidé (16) est réalisé sous la forme d'un axe de serrage (16) s'étendant perpendiculairement à la direction de guidage, l'axe de serrage (16) pouvant être immobilisé ou fixé de manière amovible par l'intermédiaire de moyens d'immobilisation ou de fixation (17, 18), dans une position sélectionnable, le long de l'ouverture de guidage (5).

8. Colonne de direction selon l'une des revendications 6 ou 7**, caractérisée en ce qu'**au moins un moyen de guidage est intégré à la pièce de colonne de direction (13, 14) réglable ou déplaçable.

9. Colonne de direction selon l'une des revendications 6 à 8, **caractérisée en ce qu'**au moins un moyen de guidage est intégré à une pièce de support fixe avec le véhicule et sur laquelle peut être immobilisée ou fixée de manière amovible, la pièce de colonne de direction (13, 14) réglable ou déplaçable.
